(19) Europäisches Patentamt
European Patent Office
Office européen des brevets

(11) **EP 1 083 149 A2**

(12) **EUROPÄISCHE PATENTANMELDUNG**

(43) Veröffentlichungstag:
**14.03.2001 Patentblatt 2001/11**

(51) Int. Cl.[7]: **C01B 33/38**, C11D 3/12,
C11D 7/14

(21) Anmeldenummer: **00118913.3**

(22) Anmeldetag: **01.09.2000**

(84) Benannte Vertragsstaaten:
**AT BE CH CY DE DK ES FI FR GB GR IE IT LI LU
MC NL PT SE**
Benannte Erstreckungsstaaten:
**AL LT LV MK RO SI**

(30) Priorität: **11.09.1999 DE 19943470**

(71) Anmelder: **Clariant GmbH
65929 Frankfurt am Main (DE)**

(72) Erfinder:
• **Bauer, Harald, Dr.
50170 Kerpen (DE)**
• **Holz, Josef, Dr.
50374 Erftstadt (DE)**
• **Schimmel, Günther, Dr.
50374 Erftstadt (DE)**

(54) **Kristallines Alkalischichtsilikat**

(57) Die Erfindung betrifft ein kristallines Alkalischichtsilikat der allgemeinen Formel

$$a\, M^I_2O \cdot b\, EO_2 \cdot c\, X_2O_5 \cdot d\, ZO_3 \cdot SiO_2 \cdot e\, H_2O,$$

in der $M^I$ ein Alkalimetall, E ein Element der vierten
Hauptgruppe, X ein Element der fünften Hauptgruppe
und Z ein Element der sechsten Hauptgruppe des Periodensystems bedeuten und weiterhin gilt:

$$0{,}25 \leq a \leq 6{,}25$$
$$2{,}5 \cdot 10^{-4} \leq b \leq 5{,}63$$
$$0 \leq c \leq 2{,}81$$
$$0 \leq d \leq 5{,}63$$
$$0 \leq e \leq 15{,}3.$$

Die Erfindung betrifft auch ein Verfahren zur Herstellung dieses kristallinen Alkalischichtsilikats sowie
Wasch- und Reinigungsmittel, die das erfindungsgemäße kristalline Alkalischichtsilikat enthalten.

**EP 1 083 149 A2**

**Beschreibung**

Gegenstand der Erfindung ist ein kristallines Alkalischichtsilikat, ein Verfahren zu seiner Herstellung sowie Wasch- und Reinigungsmittel, die das erfindungsgemäße kristalline Alkalischichtsilikat enthalten.

Kristalline schichtförmige Natriumsilikate (Schichtsilikate) der Formel $NaMSi_xO_{2x} \cdot yH_2O$, wobei M Natrium oder Wasserstoff bedeutet, x eine Zahl von 1,9 bis 4 und y eine Zahl von 0 bis 20 ist und bevorzugte Werte für x 2, 3 oder 4 sind, haben sich als geeignete Ersatzstoffe für die Waschmittelbuilder Phosphat und Zeolith erwiesen. Die Verwendung solcher kristallinen Schichtsilikate zur Enthärtung von Wasser wird beispielsweise in der EP-B-0 164 514 beschrieben.

Ein mit Phosphor dotiertes kristallines Schichtsilikat wird in der DE-A-196 01 063 beschrieben. Beansprucht wird dort ein kristallines Natriumschichtsilikat der allgemeinen Formel $xNa_2O*ySiO_2*zP_2O_5$ mit dem Verhältnis x zu y von 0.35 bis 0.6, dem Verhältnis x zu z von 1.75 bis 1200 und dem Verhältnis von y zu z von 4 zu 2800.

Ein Granulat aus kristallinem Natriumschichtsilikat mit einem Mol-Verhältnis $SiO_2/Na_2O$ von 1.7 bis 4.1 zu 1 und feuchtigkeitsaufnehmenden Substanzen wird in JP-A-10291817 beschrieben. Um ein solches Granulat zu erhalten, wurde eine Mischung von 80 Gew.-% Natriumsilikat ($SiO_2/Na_2O$ Molverhältnis von 2) und 20 Gew.-% $Na_2CO_3$ kompaktiert, gemahlen und klassiert.

Waschmittelbuilder erfüllen eine Vielzahl von Funktionen. Darunter sind besonders die Entfernung oder Herabsetzung von Wasserhärte und die Lieferung von Alkalität, d.h. die Heraufsetzung des pH-Wertes in der Waschlauge zu nennen. Die Entfernung der Wasserhärte wird üblicherweise durch die Messung des Calciumbindevermögens (CBV, s. allg. Vorschrift „Bestimmung des Calciumbindevermögens") gemessen. Die Builderleistung ist eine summarische Größe, die u.a. Calciumbindevermögen und Alkalität zusammenfasst. Üblicherweise wird sie in praktischen Waschversuchen in Waschmaschinen bestimmt (s. allg. Vorschrift „Bestimmung der Waschwirkung" und „Bestimung der anorganischen Inkrustierung").

Die Entfernung der im Leitungswasser vorhandenen Wasserhärte ist wichtig, da sie bei den üblichen, insbesondere höheren Waschtemperaturen an Heizstäben, Waschmaschinenwänden und an Textilien anorganische Verkrustungen („Inkrustierungen") verursacht und die häufig eingesetzte anionischen Tenside in Form von sogenannten Kalkseifen zur Ausfällung bringen. Dies hat zum einen eine Minderung der Waschkraft zur Folge und ergibt andererseits nach nur wenigen Waschgängen einen Grauschleier auf der Wäsche. Anorganische Inkrustierungen bestehen aus in Form von Calciumcarbonat ausgefällter Wasserhärte bzw. aus abgelagerten Resten gelöster Waschmittelbuilderanteile. Die (erwünschte) Erhöhung des pH-Wertes in der Waschlösung hat zur Folge, dass Schmutzpartikel eine höhere Oberflächenladung erhalten und so leichter vom Gewebe zu entfernen sind.

Weiterhin soll ein Builder nicht zu hohe Ablagerungen auf den Textilien durch nicht aufgelöste Builderreste erzeugen. Dies wird üblicherweise durch den Löslichkeitstest (s. allg. Vorschirft „Löslichkeitstest") bestimmt.

Es ist bekannt, daß die Zugabe von Carbonat in Leitungswasser die Ausfällung von Calciumcarbonat unter Ausbildung von schädlichen Belägen an der Waschmaschine und Inkrustierungen in den Textilien bewirkt. Der Fachmann verwendet für Waschmittel deswegen Buildersubstanzen, um dem Leitungswasser Calcium und Magnesium zu entziehen.

Bisher fehlt es jedoch an geeigneten Substanzen, die in der Lage sind, allen vorgenannten Anforderungen gerecht zu werden.

Überraschenderweise wurde nun gefunden, daß Schichtsilikate durch bestimmte eingebundene Substanzen, die geforderteLeistungsfähigkeit mehr als erwartet erfüllen bzw. sogar noch verbessern und insbesondere der zu erwartenden Bildung von Niederschlägen (Löslichkeit) entgegenwirken.

Es ist daher Aufgabe der vorliegenden Erfindung, ein kristallines Alkalischichtsilikat zur Verfügung zu stellen, das gegenüber dem Stand der Technik ein erhöhtes Wasserenthärtungsvermögen, eine verbesserte Builderleistung und eine verringerte Bildung von Rückständen ergibt.

Die Aufgabe wird gelöst durch ein kristallines Alkalischichtsilikat der allgemeinen Formel

$$a\,M^I_2O \cdot b\,EO_2 \cdot c\,X_2O_5 \cdot d\,ZO_3 \cdot SiO_2 \cdot e\,H_2O,$$

in der $M^I$ ein Alkalimetall, E ein Element der vierten Hauptgruppe, X ein Element der fünften Hauptgruppe und Z ein Element der sechsten Hauptgruppe des Periodensystems bedeuten und weiterhin gilt:

$0,25 \leq a \leq 6,25$
$2,5 \cdot 10^{-4} \leq b \leq 5,63$
$0 \leq c \leq 2,81$
$0 \leq d \leq 5,63$
$0 \leq e \leq 15,3$.

Bevorzugt ist

$0,25 \leq a \leq 6,25$
$2,5 \cdot 10^{-4} \leq b \leq 5,63$
$1,25 \cdot 10^{-4} \leq c \leq 2,81$
$2,4 \cdot 10^{-4} \leq d \leq 5,63$
$0 \leq e \leq 15,3.$

Bevorzugt ist

$0,5 \leq a \leq 0,73$
$3,6 \cdot 10^{-3} \leq b \leq 0,086$
$2,56 \cdot 10^{-4} \leq c \leq 0,5$
$3,6 \cdot 10^{-3} \leq d \leq 0,086$
$0 \leq e \leq 0,25.$

Bevorzugt ist

$0,5 \leq a \leq 0,63$
$8,6 \cdot 10^{-3} \leq b \leq 0,043$
$1,29 \cdot 10^{-3} \leq c \leq 0,025$
$8,6 \cdot 10^{-3} \leq d \leq 0,043$
$0 \leq e \leq 0,25.$

Bevorzugt ist d = 0 und

$0,25 \leq a \leq 6,25$
$2,5 \cdot 10^{-4} \leq b \leq 5,63$
$1,25 \cdot 10^{-4} \leq c \leq 2,81$
$3,13 \cdot 10^{-4} \leq e \leq 15,3.$

Bevorzugt ist d = 0 und

$0,5 \leq a \leq 0,6$
$3,6 \cdot 10^{-3} \leq b \leq 0,086$
$2,56 \cdot 10^{-4} \leq c \leq 0,5$
$0 \leq e \leq 0,29.$

Bevorzugt ist d = 0 und

$0,52 \leq a \leq 0,58$
$8,6 \cdot 10^{-3} \leq b \leq 0,043$
$1,29 \cdot 10^{-3} \leq c \leq 0,025$
$0 \leq e \leq 0,29.$

In einer anderen Ausführungsform der Erfindung ist c = 0 und

$0,25 \leq a \leq 6,25$
$2,5 \cdot 10^{-4} \leq b \leq 5,63$
$2,5 \cdot 10^{-4} \leq d \leq 5,63$
$0 \leq e \leq 12,5.$

Bevorzugt ist c = 0 und

$0,51 \leq a \leq 0,7$
$3,6 \cdot 10^{-3} \leq b \leq 0,086$
$3,6 \cdot 10^{-3} \leq d \leq 0,086$
$0 \leq e \leq 0,29.$

Bevorzugt ist c = 0 und

$0,51 \leq a \leq 0,59$
$8,6 \cdot 10^{-3} \leq b \leq 0,043$
$8,6 \cdot 10^{-3} \leq d \leq 0,043$
$0 \leq e \leq 0,29.$

In einer weiteren Ausführungsform der Erfindung ist c = 0 und d = 0 und

$0,25 \leq a \leq 6,25$
$2,5 \cdot 10^{-4} \leq b \leq 5,63$
$0 \leq e \leq 12,5.$

Bevorzugt ist c = 0 und d = 0 und

$0,5 \leq a \leq 0,59$
$3,6 \cdot 10^{-3} \leq b \leq 0,086$
$0 \leq e \leq 0,29.$

Bevorzugt ist c = 0 und d = 0 und

$0,51 \leq a \leq 0,54;$
$8,59 \cdot 10^{-3} \leq b \leq 0,043;$
$0 \leq e \leq 0,26.$

Bevorzugt handelt es sich bei dem Alkalimetall ($M^I$) um Lithium, Natrium, Kalium, Cäsium oder Mischungen davon.

Besonders bevorzugt handelt es sich bei dem Alkalimetall ($M^I$) um Natrium und/oder Kalium.

Bevorzugt handelt es sich bei dem Element der vierten Hauptgruppe (E) um Kohlenstoff, Germanium, Zinn, Blei oder Mischungen davon. Besonders bevorzugt handelt es sich bei dem Element der vierten Hauptgruppe (E) um Kohlenstoff.

Bevorzugt handelt es sich bei dem Element der fünften Hauptgruppe (X) um Stickstoff, Phosphor, Arsen, Antimon, Wismut oder Mischungen davon.

Besonders bevorzugt handelt es sich bei dem Element der fünften Hauptgruppe (X) um Phosphor.

Bevorzugt handelt es sich bei dem Element der sechsten Hauptgruppe (Z) um Schwefel, Selen, Tellur oder Mischungen davon.

Besonders bevorzugt handelt es sich bei dem Element der sechsten Hauptgruppe (Z) um Schwefel.

Bevorzugt enthält das erfindungsgemäße kristalline Alkalischichtsilikat zusätzlich bis zu 10 Gew.-% Fremdbestandteile.

Bevorzugt handelt es sich bei den Fremdbestandteilen um Verbindungen von Erdalkalimetallionen (Magnesium, Calcium, Strontium, Barium), Aluminium, Zink, Eisen, Titan, Vanadium, Chrom, Mangan, Cobalt, Nickel, Bor, Fluorid, Chlorid, Bromid und/oder Iodid.

Die vorliegende Aufgabe wird auch gelöst durch ein Verfahren zur Herstellung von kristallinen Alkalischichtsilikaten der allgemeinen Formel

$$a\, M^I_2 O \cdot b\, EO_2 \cdot c\, X_2O_5 \cdot d\, ZO_3 \cdot SiO_2 \cdot e\, H_2O,$$

in der $M^I$ ein Alkalimetall, E ein Element der vierten Hauptgruppe, X ein Element der fünften Hauptgruppe und Z ein Element der sechsten Hauptgruppe des Periodensystems bedeuten und weiterhin gilt: $0,25 \leq a \leq 6,25$; $2,5 \cdot 10^{-4} \leq b \leq 5,63$; $0 \leq c \leq 2,81$; $0 \leq d \leq 5,63$; $0 \leq e \leq 15,3$, dadurch gekennzeichnet, daß man ein Natriumsilikathaltiges Ausgangsmaterial mit einer oder mehreren Verbindungen, die die Komponenten $M^I$, E, X und/oder Z enthalten, mischt und anschließend tempert. Hinsichtlich der Bedeutung der Komponenten $M^I$, E, X und Z sei auf die obigen Ausführungen verwiesen. Dies gilt ebenfalls für die bevorzugten Ausführungsformen. Die Mischung hat hinsichtlich der Komponenten $M^I$, E, X und/oder Z bevorzugt eine Zusammensetzung, die der Zusammensetzung der erfindungsgemäßen Alkalischichtsilikate entspricht.

Bevorzugt handelt es sich bei dem Natriumsilikathaltigen Ausgangsmaterial um Alkaliwassergläser oder um sprühgetrocknetes amorphes Natriumsilikat. Ebenfalls geeignet sind Festwassergläser.

Bevorzugt führt man das Verfahren so aus, daß man Alkaliwassergläser mit Alkalicarbonat, Alkalisulfat und/oder Alkaliphosphaten vermischt, das erhaltene Produkt sprühtrocknet und anschließend tempert.

Nach einem anderen erfindungsgemäßen Verfahren wird sprühgetrocknetes amorphes Natriumsilikat mit Alkalicarbonat, Alkalisulfat und/oder Alkaliphosphaten vermischt und anschließend getempert.

Bevorzugt tempert man bei Temperaturen von 700 bis 1300 K.

Bevorzugt tempert man bei Temperaturen von 800 bis 1200 K.

Besonders bevorzugt tempert man bei Temperaturen von 900 bis 1100 K.

Der Zeitraum für das Tempern ist nicht kritisch, er kann von wenigen Minuten bis mehrere Stunden betragen. Bevorzugt ist eine Temperzeit von 60 min bis 120 min. Vielfach reicht eine Temperzeit von 1 h aus.

Die Erfindung betrifft auch ein Wasch- und Reinigungsmittel, welches ein kristallines Alkali-schichtsilikat gemäß der Erfindung enthält.

Bevorzugt enthält das Wasch- und Reinigungsmittel

 0,5 bis 90 Gew.-% des kristallinen Alkalischichtsilikats
 0,5 bis 70 Gew.-% Cobuilder
 ad 100 Gew.-% weitere übliche Inhaltsstoffe.

Bevorzugt enthält das Wasch- und Reinigungsmittel

 0,5 bis 90 Gew.-% des kristallinen Alkalischichtsilikats
 0,5 bis 60 Gew.-% Tensid
 ad 100 Gew.-% weitere übliche Inhaltsstoffe.

Bevorzugt enthält das Wasch- und Reinigungsmittel

 0,5 bis 90 Gew.-% des kristallinen Alkalischichtsilikats
 0,5 bis 60 Gew.-% bleichaktive Agenzien
 ad 100 Gew.-% weitere übliche Inhaltsstoffe.

Bevorzugt enthält das Wasch- und Reinigungsmittel

 0,5 bis 90 Gew.-% des kristallinen Alkalischichtsilikats
 0,5 bis 70 Gew.-% Cobuilder
 0,5 bis 60 Gew.-% Tensid
 ad 100 Gew.-% weitere übliche Inhaltsstoffe.

Bevorzugt enthält das Wasch- und Reinigungsmittel

 0,5 bis 90 Gew.-% des kristallinen Alkalischichtsilikats
 0,5 bis 70 Gew.-% Cobuilder
 0,5 bis 60 Gew.-% bleichaktive Agenzien
 ad 100 Gew.-% weitere übliche Inhaltsstoffe.

Bevorzugt enthält das Wasch- und Reinigungsmittel

 0,5 bis 90 Gew.-% des kristallinen Alkalischichtsilikats
 0,5 bis 70 Gew.-% Cobuilder
 0,5 bis 60 Gew.-% Tensid
 0,5 bis 60 Gew.-% bleichaktive Agenzien
 ad 100 Gew.-% weitere übliche Inhaltsstoffe.

Bevorzugt enthält das Wasch- und Reinigungsmittel

 0,5 bis 90 Gew.-% des kristallinen Alkalischichtsilikats
 0,5 bis 70 Gew.-% Elektrolytlieferant
 ad 100 Gew.-% weitere übliche Inhaltsstoffe.

Bevorzugt enthält das Wasch- und Reinigungsmittel

50 bis 99 Gew.-% des kristallinen Alkalischichtsilikats

0,01 bis 10 Gew.-% Farbstoff

ad 100 Gew.-% weitere übliche Inhaltsstoffe.

Bevorzugt handelt es sich bei den Cobuildern um kristalline Aluminosilikate, mono-, oligo- oder polymere Carbonsäuren, Alkalicarbonate, Alkaliortho-, -pyro-, polyphosphate, kristalline Alkalisilikate mit einem Kristallgitter ohne Schichtstruktur und/oder amorphe Alkalisilikate.

Bevorzugt handelt es sich bei den bleichaktiven Agenzien um Perborate, Percarbonate und/oder Enzyme. Geeignete Enzyme sind z.B. Peroxidasen und Reduktasen.

Bevorzugt handelt es sich bei den Tensiden um anionische, kationische, nichtionische und / oder zwitterionische Tenside.

Bevorzugt handelt es sich bei den Elektrolytlieferanten um Sulfate, Chloride und/oder Borate.

Bei den vorgenannten Wasch- und Reinigungsmitteln kann das erfindungsgemäße kristalline Alkalischichtsilikat bevorzugt zu 1 bis 50 Gew.-% und besonders bevorzugt zu 1 bis 30 Gew.-% enthalten sein. In einer anderer Ausführungsform der Erfindung ist es bevorzugt zu 60 bis 98 Gew.-% und besonders bevorzugt zu 70 bis 98 Gew.-% enthalten.

Die vorgenannten Alkalimetalle ($M^I$) können über jede Form von chemischer Verbindung in das Natriumsilikathaltige Ausgangsmaterial eingebracht werden, soweit sich im endgültigen Produkt die erfindungsgemäße Zusammensetzung ergibt. Dabei können diese chemischen Verbindungen ggf. auch die anderen Komponenten E, X, Z, Si und $H_2O$ enthalten.

Die Elemente der vierten Hauptgruppe (E) wie Kohlenstoff, Germanium, Zinn und/oder Blei, wobei der Kohlenstoff besonders bevorzugt ist, können ebenfalls über jede Form von chemischer Verbindung in das Natriumsilikathaltige Ausgangsmaterial eingebracht werden, soweit sich im endgültigen Produkt die erfindungsgemäße Zusammensetzung ergibt. Dabei liegt der Kohlenstoff bevorzugt in Form von Carbonationen vor. Kohlenstoff kann bei der erfindungsgemäßen Herstellung direkt als Carbonat eingesetzt werden oder in anderer Form, solange während des Herstellprozesses Carbonat erzeugt wird. Mögliche Verbindungen hierfür sind beispielsweise Oxalate, Citrate, Acetate, organische Salze und Organyle. Dabei können diese Verbindungen ggf. auch die anderen Komponenten $M^I$, X, Z, Si und $H_2O$ enthalten, soweit sich im endgültigen Produkt die erfindungsgemäße Zusammensetzung ergibt.

Für das Element der fünften Hauptgruppe (X), zu denen Stickstoff, Phosphor, Arsen, Antimon und Wismut gehören, gilt, daß diese ebenefalls über jede geeignete chemische Verbindung eingebracht werden können, soweit sich im endgültigen Produkt oder auch während des Herstellprozesses erfindungsgemäße Zusammensetzung ergibt. Dabei können die anderen Komponenten $M^I$, E, Z, Si und $H_2O$ wieder in der Zusammensetzung enthalten sein.

Besonders bevorzugt als Element der fünften Hauptgruppe ist Phosphor. Dieser liegt bevorzugt in Form von Phosphat-, Oligo- oder Polyphosphationen vor. Phosphor kann bei der erfindungsgemäßen Herstellung direkt als Mono-, Oligo- oder Polyphosphat eingesetzt werden, hier sind besonders bevorzugt Phosphorsäure, Dihydrogenphosphate, Hydrogenphosphate, Phosphate mit gemischten Kationen, Orthophosphate, Pyrophosphate oder Polyphosphate, phosphathaltige Doppelsalze, Phosphite, Phosphane oder andere geeignete Verbindungen.

Bezüglich der allgemeinen Formel ist D ein Element der sechsten Hauptgruppe, z.B. Schwefel, Selen, Tellur. Besonders bevorzugt ist Schwefel, insbesondere in Form von Sulfat-Ionen. Schwefel kann bei der erfindungsgemäßen Herstellung direkt als Sulfat eingesetzt werden, hier sind besonders bevorzugt Schwefelsäure, Hydrogensulfate, Sulfate und Doppelsalze oder in jede Form von chemischer Verbindung, die u.a. die anderen Komponenten $M^I$, E, X, Si und $H_2O$ enthalten kann, soweit sich im endgültigen Produkt die erfindungsgemäße Zusammensetzung ergibt, bzw. im Zuge des Herstellprozesses Sulfat erzeugt wird, z.B. Sulfite, Thiosulfate, Sulfide, Polysulfide etc.

Bezüglich der allgemeinen Formel kann die Silicium-haltige Komponente über jede Verbindung, die im Zuge des erfindungsgemäßen Herstellungsprozesses Silicate liefert, eingesetzt werden. Besonders bevorzugt sind Alkaliwasserglaslösungen, daraus zugängliche getrocknete (beispielsweise) pulver- oder granulatförmige Alkaliwassergläser oder Festwassergläser, hergestellt über den üblichen Schmelzprozess. Hieraus können dann auch die sprühgetrockneten amorphen Natriumsilikate hergestellt werden.

Die $H_2O$-Komponenten liegen entweder als Kristall-/Hydratwasser oder als Silanol-(Si-OH)-Gruppierungen vor.

Das erfindungsgemäße kristalline Alkalischichtsilikat enthält die E-, X- bzw. Z-Ionen in feinverteiltester Form. Es handelt sich nicht um eine einfache Mischung von Schichtsilikaten mit anderen Komponenten sondern um eine Verbindungstype neuer Struktur, aus der die E-, X- bzw. Z-Bestandteile nicht wieder abgetrennt werden können. Solche kristallinen Alkalischichtsilikate mit feinstverteilten Anteilen an den genannten anderen Ionen bzw. Verbindungen sind bisher nicht bekannt.

Die erfindungsgemäßen Alkalischichtsilikate setzen sich aus wechselnden prozentualen Verhältnissen der polymorphen Phasen der bekannten Natriumdisilikatphasen

(alpha-, beta-, delta-, epsilon-Phase) zusammen. Es können auch Anteile/Phasen von Kanemiten, von gemischten Alkalimetallsilikatphasen wie z.B. $KNaSi_2O_5$, $K_{1,3}Na_{0,7}Si_2O_7$ oder auch $K_2Si_2O_5$ vorhanden sein.

Das zuvor bereits beschriebene erfindungsgemäße Verfahren zur Herstellung des kristallinen Alkalischichtsilikates sieht vor, daß Verbindungen, die die Komponenten $M^I$, E, X bzw. Z und $H_2O$ in irgendeiner Form enthalten, zu einer Natriumsilikathaltigen Vorstufe hinzugefügt werden und dann mittelbar oder unmittelbar zur Kristallisation gebracht werden.

Bevorzugt ist es, die $M^I$-, E-, X- bzw. Z- und $H_2O$-haltigen Komponenten/Vorstufen zu einem flüssigen Natronwasserglas zuzusetzen (untermischen, darin lösen), die Lösung ganz oder teilweise vom Wasser zu befreien (Trocknung) und danach oder gleichzeitig zur Kristallisation zu bringen.

Als Trockenverfahren bieten sich unter anderem die Sprüh-, Band-, Chargentrocknung an. Geeignete Kristallisationsbedingungen sind Temperaturen von 450 bis 900 °C, bevorzugt 660 bis 760 °C. Als Apparate für die Kristallisation eignen sich Muffelöfen, Wirbelbetten, Bandöfen, Drehrohröfen und andere geeignete Apparate.

Gemäß einer anderen Verfahrensvariante ist es bevorzugt, die $M^I$-, E-, X- bzw. Z- und $H_2O$-Komponenten/Vorstufen zu einem bereits ganz oder teilweise vom Wasser befreiten festen röntgenamorphen Wasserglas bzw. Silikat zuzusetzen (etwa gemeinsam vermahlen, mischen, granulieren, agglomerieren, kompaktieren, brikettieren etc.) und die Mischung danach oder gleichzeitig zur Kristallisation zu bringen. Wahlweise kann zwischen Misch- und Kristallisationsschritt Wasser hinzugefügt bzw. entfernt werden.

Das nach den obigen Verfahren erhaltenen kristallisierte Material kann nach Bedarf weiter aufbereitet werden.

Bevorzugt ist die Herstellung von Pressgranulaten (auf eine mittlere Korngröße von $d_{50}$ = 100 bis 800 $\mu$m). Zur Pressgranulierung können die Verfahren Rollkompaktierung, Brikettierung und andere eingesetzt werden. Bei der Rollkompaktierung ist ein Preßdruck von $10kN/cm^2$ bis $100kN/cm^2$ bevorzugt und ein Preßdruck von $30kN/cm^2$ bis $80kN/cm^2$ besonders bevorzugt. Wahlweise können bis zu 10 Gew.-% Granulierhilfsmittel (beispielsweise Wasser, Wasserglas, Polyethylenglykol, nichtionishce Tenside, anionische Tenside, Polycarboxylatcopolymer) zugesetzt werden.

Bevorzugt ist auch die Herstellung von Agglomeraten. Geeignete Apparate können alle kornaufbauenden Mischer sein, z.B. Lödige-Pflugscharmischer, Eyrichmischer, Schugi-Mischer mit nachgeschaltetem Fließbetttrockner usw. Wahlweise können hier Granulierhilfsmittel (bis zu 30% Gew.-%) oder andere Waschmittelinhaltsstoffe zugesetzt werden wie z.B. Wasser, Wasserglas, Polyethylenglykol, nichtionische Tenside, anionische Tenside, Polycarboxylatcopolymer, Soil-release-Polymer und andere.

Bevorzugt wird das erhaltene kristalline Material feingemahlen (auf $d_{50}$ <100 $\mu$m). Geeignete Apparate hierfür sind beispielsweise: Kugel-, Pendelrollen-, Walzen-, Luftstrahl-, Hammer- und Prallmühlen. Wahlweise können Mahlhilfsstoffe zugesetzt werden.

Bevorzugt können auch die vorgenannten Preßgranulate fein gemahlen (auf $d_{50}$ <100 $\mu$m) werden.

Die erfindungsgemäßen kristallinen Alkalischichtsilikate können erfindungsgemäß Verwendung finden in Wasch- und Reinigungsmitteln. Bevorzugt sind hier pulverförmige Voll-, Color- und Spezialwaschmittel. Vollwaschmittel sind ausgewogene Formulierungen mit dem Ziel einer möglichst hohen Waschwirkung. Colorwaschmittel sollen vor allem Farbtextilien schonen hinsichtlich Ausbleichen und Verwaschen der Farben und Verfilzen der Fasern. Spezialwaschmittel zielen auf enge Anwendungsgebete wie Fleckensalze, Gardinenwaschmittel, Wollwaschmittel und andere.

Die erfindungsgemäßen kristallinen Alkalischichtsilikate können weiterhin Anwendung finden in Wasserenthärtern, die vor allem in Regionen mit hoher Wasserhärte einen leistungssteigernden Effekt auf das Waschergebnis und einen Schutzeffekt hinsichtlich der Waschmaschine besitzen. Weitere Anwendungen für die erfindungsgemäßen kristallinen Alkalischichtsilikate sind Maschinengeschirreiniger. Hier sind die erfindungsgemäßen kristallinen Alkalischichtsilikate vor allem wegen ihrer guten Schmutzdispergierung, ihrer hohen Alkalität und ihrer ausgezeichneten Schutzwirkung gegen Korrosion von Gläsern geeignet.

Die vorgenannten Wasch- und Reinigungsmittel, Wasserenthärter und Maschinengeschirreiniger können in Pulverform, Granulatform und Tablettenform eingesetzt werden. Bei Tabletten kann die Form zylinderförmig, quaderförmig oder auch weitgehend beliebige geometrische Formen annehmen. Im Falle des Zylinders kann das Verhältnis von Radius zu Höhe zwischen 0,25 und 4 zu 1 betragen. Der Pressdruck kann zwischen 12 und 0,3 $kN/cm^2$ betragen. Bevorzugt ist auch die mehrstufige Verpressung. Hierbei werden beliebig viele Schichten in mehreren Schritten nacheinander aufeinander gepresst, so daß sich mehrere Schichten ergeben. Besonders bevorzugt ist bei zweischichtigen Tabletten ein Volumenverhältnis der beiden Schichten von 1 zu 10 bis 10 zu 1.

Bestimmung der Kornverteilung mit dem Microtrac Granulometer:

Die Teilchengröße in der Dispersion wird mit Hilfe eines Granulometer Microtrac ASVR/FRA der Fa. Leeds u. Northrup bestimmt. Gemessen wird die Reflexion bzw. Beugung eines Laserstrahls beim Durchdringen der Dispersion. 400ml Ethanol werden durch die Lasermeßzelle gepumpt. Automatisch wird die Festkörperprobe (z.B. 70 mg) zudosiert und nach 10 Minuten die Teilchengrößenverteilung bestimmt. Die Auswertungseinheit des Gerätes berechnet

den $d_{50}$-Wert.

Bestimmung der Kornverteilung durch Siebanalyse:

In eine Siebmaschine der Fa. Retsch werden die Einsätze mit gewünschten Sieben eingesetzt. Dabei nimmt die Maschenweite der Siebe von oben nach unten ab. 50 g des zu untersuchenden Pulvers werden auf das weiteste Sieb aufgegeben. Durch die Schwingbewegung der Siebmaschine wird das Pulvermaterial durch die verschiedenen Siebe befördert. Die Rückstände auf den Sieben werden ausgewogen und rechnerisch auf die Materialeinwaage bezogen. Aus den Werten kann der $d_{50}$-Wert berechnet werden. Werte, die nach dieser Methode bestimmt wurden, sind in den Beispielen mit * gekennzeichnet.

Löslichkeitstest:

Dazu werden 800ml Leitungswasser (Wasserhärte 20 Grad deutscher Härte) auf 20 °C temperiert und mit einem Propeller-(Balken-)Rührer gerührt. 2 g der Testsubstanz werden zugegeben und 20 min gerührt. Mit dem leichten Vakuum einer Wasserstrahlpumpe wird die Dispersion durch ein 20 μm-Metallsiebgewebe gesaugt. Das Sieb wird bei 80 bis 100°C 1 Stunde im Umlufttrockenschrank getrocknet. Die Gewichtszunahme wird auf die Einwaage bezogen, auf Prozent normiert und die Differenz zu 100% als Löslichkeit (in %) bezeichnet.

Bestimmung des Calciumbindevermögens (CBV):

Eine Mischung aus einer Puffer-Stammlösung und deionisiertem Wasser wird in einem ErWeKa Dissolutiontester vorgelegt, gerührt und auf 30 °C temperiert. Die Puffer-Stammlösung ist eine wässrige Lösung von Glycin, Natriumchlorid, Calciumchlorid und Natriumhydroxid in geeigneten Konzentrationen. Die Calciumsensitive Elektrode Modell 932001 der Fa. Orion wird in die Lösung eingetaucht und durch Aufstockung der Lösung mit einer Calcium-Stammlösung geeicht. Das geschieht mit der Auswerteeinheit EA 940 der Fa. Orion. Nach der Aufstockung enthält die Lösung eine Wasserhärte von 17 Grad deutscher Wasserhärte. Gleichzeitig mit Zugabe der Untersuchungssubstanz (1 g) wird das Orion EA 940 gestartet. Der pH-Wert der Meßlösung beträgt 10,2. Das Orion EA 940 gibt in bestimmten Zeitabständen die Konzentration an freien Calciumionen aus. Mit Hilfe der bekannten Einwaage an Calcium wird aus der Konzentration der freien, nicht gebundenen Calciumionen nach 2 min auf die Menge gebundenen Calciums, das sogenannte Calciumbindevermögen, geschlossen. Dies wird in mg $CaCO_3$/g angegeben.

Bestimmung der Phasenzusammensetzung:

Eine gemörserte Feststoffprobe wird in einem Röntgenpulverdiffraktometer Philips PW1710 vermessen (CuK alpha 2-Strahlung, Wellenlänge 1,54439 Angström, Beschleunigungsspannung 35kV, Heizstrom 28 mA, Monochromator, Scangeschwindigkeit 3 Grad 2 theta pro Minute). Die erhaltenen Intensitäten werden wie folgt ausgewertet:

Substanz charakteristischer Peak (d-Wert in Angström)
Alpha-Phase 3,29 +/- 0,07, typisch 3,31
Beta-Phase 2,97 +/- 0,06
Delta-Phase 3,97 +/- 0,08

Die Gehalte in Prozent errechnen sich aus den Intensitäten $I_a$, $I_b$, $I_d$ - gemessen in Impulsen - der alpha, beta, delta Phasen nach folgenden Formeln:

Alpha-Gehalt: $A\,[\%] = 100 * I_a/(I_a + I_b + I_d)$
Beta-Gehalt: $B\,[\%] = 1{,}41 * 100 * I_b/(I_a + I_d)$
Delta-Gehalt: $D\,[\%] = 100 - A - D$

Zur Bestimmung Anteils an nicht-schichtsilikatischem Natriumsilikat (AM) wird der Untergrund (Impulse) des Röntgenpeaks bei einem d-Wert von 2,65 Angström bestimmt ($I_{am}$) und mit folgender empirischen Formel in den Prozentgehalt umgerechnet:

$$AM\,[\%] = (I_{am} - 70) * 100/450$$

Kompaktieren von Natriumsilikaten:

In einem Rollkompaktor (Firma Hosokawa-Bepex, Typ: L200/50P) wird das entsprechende Ausgangsmaterial mit Hilfe einer Stopfschnecke zwischen die Kompaktorwalzen befördert (Einstellung: Stufe 5). Dies geschieht so schnell, daß bei einer Auflagelänge von 50mm ein Preßdruck von 140 bis 160 kN entsteht. Die Walzenumdrehung wird auf Stufe 3 bis 7 gestellt, der Walzenspalt beträgt 0,1 mm. Die entstehenden Schülpen (Länge: ca. 50mm, Dicke: ca. 2 bis 5 mm, Breite ca. 10 bis 15 mm) werden in einer Hammermühle (Fa. Alpine, Typ UPZ) mit einem Sieblochdurchmesser von 5mm bei einer Umdrehungszahl von 600 bis 1400 Upm gebrochen. Vom gebrochenen pulverförmigen Produkt werden Überkorn (mit Sieb mit Lochdurchmesser 1,4 mm) und Unterkorn (Lochdurchmesser 0,25mm) abgetrennt.

Herstellung der Testwaschmittel:

Die optischen Aufheller werden in einem Viertel der Alkylethoxylat (AE)-Menge angerührt und im Haushalts-Multimixer (Fa. Braun) mit der Hälfte der Sodamenge gemischt. Im Pflugscharmischer der Fa. Lödige wird der Rest Soda und die Gesamtmengen Zeolith und Polymer 15 Minuten bei 300 U/Min. gemischt. Dann wird die Hälfte des verbliebenen AE in 5 Minuten aufgesprüht. Dann wird das erfindungsgemäße kristalline Alkalischichtsilikat zugegeben und 10 Minuten gemischt. Dann wird die restliche zweite Hälfte AE in weiteren 5 Minuten aufgesprüht. Schließlich werden LAS, Seife, Antischaum, Phosphonat und Compound mit optischem Aufheller zugegeben und 10 Minuten bei 300 U/Min. nachgemischt. Im Taumelmischer wird die Mischung aus dem Lödigemischer unter geringer Scherbelastung mit Perborat, TAED und Enzymen versetzt und 15 Minuten vermischt.

Waschversuche:

In einer haushaltsüblichen Waschmaschine (Typ: Novotronic 927 WPS, Fa. Miele) wurden bei 60°C und einer Wasserhärte von 18° dH spezielle Testgewebe mit einem Testwaschmittel bei einer Dosierung von 65 bzw. 135 g/Waschgang gewaschen. Den Testgeweben wurde weiterer Wäscheballast (3,75 kg) beigefügt.

Bestimmung der anorganischen Inkrustierung:

Zur Bestimmung der anorganischen Inkrustierung wurden Testgewebe, dies sind ein Baumwollfrottee- (Fa. Vossen), jeweils ein Baumwolldoppelripp-, Polyester/Baumwolle-Mischgewebe (Typ 20A) und Standardbaumwollgewebe (Typ 10A) der Fa. Wäschereiforschung Krefeld Testgewebe GmbH und ein Standardbaumwollgewebe der Eidgenössischen Materialprüfanstalt St. Gallen, Schweiz wiederholt (15 mal) nach obengenannter Prozedur gewaschen. Nach 15 Wäschen wurde von jedem der Gewebe eine Probe genommen und diese in einem Muffelofen bei einer Temperatur 1000 °C und einer Zeitdauer von 24 Stunden verascht. Die Gewichte der Rückstande werden rechnerisch auf die eingesetzten Gewebemengen (Gewichte) bezogen.

Bestimmung der Waschwirkung (WW):

In fünf verschiedenen Waschzyklen wurden je 2 Läppchen der 5 verschieden künstlich angeschmutzten Gewebe (WFK 10C, WFK 10D, WFK 20D, WFK 30D von Fa. Wäscherei-forschung Krefeld Testgewebe GmbH) zugesetzt und einmal gewaschen. Die Lappen wurden gebügelt und die Remissionen mit dem Weißgradmeßgerät Elrepho 3000 der Firma Datacolor an jedem der Testläppchen viermal ohne UV-Anregung (mit Verwendung eines UV-Sperr-Filters) bestimmt. Die Remissionsdifferenzen (delta R) werden rechnerisch durch Subtraktion der Remissionen nach der Wäsche von den Remissionen vor der Wäsche ermittelt delta R = R (nach der Wäsche) [%] - R (vor der Wäsche) [%]) .
Die Remissionen der Läppchen vor der Wäsche wurden vor der Versuchsreihe mit dem gleichen Weißgradmeßgerät bestimmt. Hier angeführt ist der Durchschnitt aller Remissionsdifferenzen aller Gewebe.

Tablettierung von Waschmitteln:

Zur Tablettierung wird die Waschmittelformulierung gemischt und mit einer Tablettenpresse der Fa. Matra in die entsprechende Form gepresst. Der Pressdruck kann zwischen 12 und 0,3 kN/cm$^2$ betragen. Der Pressling hat die Maße Höhe 18mm, Durchmesser 41 mm.

Herstellung der Maschinengeschirreiniger:

In einem Pflugscharmischer der Fa. Lödige wurden die Komponenten Phosphat, erfindungsgemäßes kristallines Alkalisilikat, Soda, Natriumcitrat, Polymer vorgelegt und gut gemischt. Dann wird das Alkylethoxylat aufgesprüht. Enzyme, Parfüm, Percarbonat oder Perborat und TAED werden zum Schluß untergemischt.

Beispiel 1 (Vergleich)

250 kg Wasserglas mit einer prozentualen Zusammensetzung $Na_2O/SiO_2/H_2O$ =15,4/30,1/54,5 (Gew.-%) wird in einem Laborzerstäubungstrocker (Sprühturm) der Fa. Anhydro zu einem amorphen Natriumsilikat mit einem Aktivstoffgehalt von 81,5 % sprühgetrocknet. 15 kg dieses amorphen Natriumsilikates werden in einem Muffelofen (Fa. Nabertherm, Typ W1000/H) bei 720°C für 90 Minuten getempert. Das erkaltete Produkt (ca. 10 kg) wird mit einem Bakkenbrecher und einer Scheibenmühle pulverisiert. Dies wird noch zweimal wiederholt

Beispiel 2 (Vergleich)

Zu 7 kg des gemahlenen Produktes von Beispiel 1 werden 210g wasserfreie Soda gegeben und 50 min mit einer Kugelmühle U 280A0 der Fa. Weite gemahlen, die innen metallausgekleidet ist und deren Trommel sich mit ca. 50 U/min dreht. Als Mahlkörper werden 44 kg Porzellankugeln eingesetzt. Dies wird noch zweimal wiederholt und die Chargen vereinigt.

Beispiel 3 (Vergleich)

Von dem Material aus Beispiel 2 werden etwa 15 kg entsprechend der allgemeinen Vorschrift zur Kompaktierung von Natriumsilikaten kompaktiert. Es werden 6,4 kg Gutkorn, 6,6 kg Überkorn und 2,0 kg Unterkorn erhalten.

Beispiel 4

In einem Taumelmischer werden 367 g feingemahlene wasserfreie Soda zu 15 kg des sprühgetrockneten amorphen Natriumsilikates von Beipiel 1 gegeben und 1 h gemischt. Die Mischung wird in einem Muffelofen (Fa. Nabertherm, Typ W1000/H) bei 720°C für 90 Minuten getempert. Das erkaltete Material (ca. 10 kg) wird mit einem Bakkenbrecher und einer Scheibenmühle pulverisiert.

Beispiel 5

In 150 kg Wasserglas mit der Zusammensetzung wie in Beispiel 1 werden 2048 g wasserfreie Soda gelöst und die Lösung in einem Laborzerstäubungstrocker (Sprühturm) der Fa. Anhydro sprühgetrocknet zu einem amorphen Natriumsilikat mit einem Aktivstoffgehalt von 82 %. 15 kg des amorphen Natriumsilikates werden in einem Muffelofen (Fa. Nabertherm, Typ W1000/H) bei 720°C 90 min getempert. Dies wird noch zweimal wiederholt. Das erkaltete Produkt (ca. 30 kg) wird mit einem Backenbrecher und einer Scheibenmühle pulverisiert.

Beispiel 6

7 kg des gemahlenen Produktes von Beispiel 5 werden 50 min mit einer Kugelmühle U 280A0 der Fa. Welte gemahlen, die innen metallausgekleidet ist und deren Trommel sich mit ca. 50 U/min dreht. Als Mahlkörper werden 44 kg Porzellankugeln eingesetzt.

Beispiel 7

Von dem Material aus Beispiel 5 werden ca. 15 kg entsprechend der allgemeinen Vorschrift zur Kompaktierung von Natriumsilikaten kompaktiert. Es werden 5,8 kg Gutkorn, 7,0 kg Überkorn, 2,3 kg Unterkorn erhalten.

Beispiel 8

7 kg des Produktes aus Beispiel 7 werden 45 min mit einer Kugelmühle U 280A0 der Fa. Weite gemahlen, die innen metallausgekleidet ist und deren Trommel sich mit ca. 50 U/min dreht. Als Mahlkörper werden 44 kg Porzellankugeln eingesetzt.

Beispiel 9

In 50 kg Wasserglas mit einer prozentualen Zusammensetzung $Na_2O/SiO_2/H_2O$=16,4/28,6/55 (Gew.-%)

werden 675 g wasserfreie Soda gelöst und die Lösung in einem Laborzerstäubungstrocker (Sprühturm) der Fa. Anhydro sprühgetrocknet zu einem amorphen Natriumsilikat mit einem Aktivstoffgehalt von 82,2 %. 15 kg des amorphen Natriumsilikates werden in einem Muffelofen (Fa. Nabertherm, Typ W1000/H) bei 720°C 90 min getempert. Das erkaltete Produkt (ca. 10 kg) wird mit einem Backenbrecher und einer Scheibenmühle pulverisiert.

Beispiel 10

In 50 kg Wasserglas mit einer prozentualen Zusammensetzung $Na_2O/SiO_2/H_2O$ =15/30/55 (Gew.-%) werden 675 g wasserfreie Soda gelöst und die Lösung in einem Laborzerstäubungstrocker (Sprühturm) der Fa. Anhydro sprühgetrocknet zu einem amorphen Natriumsilikat mit einem Aktivstoffgehalt von 82,5 %. 15 kg des amorphen Natriumsilikates werden in einem Muffelofen (Fa. Nabertherm, Typ W1000/H) bei 720°C 90 min getempert. Das erkaltete Produkt (ca. 10 kg) wird mit einem Backenbrecher und einer Scheibenmühle pulverisiert.

Beispiel 11

In 50 kg Wasserglas mit der Zusammensetzung wie in Beispiel 1 werden 683 g wasserfreie Soda gelöst und die Lösung in einem Laborzerstäubungstrocker (Sprühturm) der Fa. Anhydro sprühgetrocknet zu einem amorphen Natriumsilikat mit einem Aktivstoffgehalt von ca. 83 %. 15 kg des amorphen Natriumsilikates werden in einem Muffelofen (Fa. Nabertherm, Typ W1000/H) bei 720°C 90 min getempert. Das erkaltete Produkt (ca. 10 kg) wird mit einem Backenbrecher und einer Scheibenmühle pulverisiert.

Beispiel 12

In einem Taumelmischer werden 1223 g feingemahlene wasserfreie Soda zu 15 kg des sprühgetrockneten amorphen Natriumsilikates von Beispiel 1 gegeben und 1h gemischt. Die Mischung wird in einem Muffelofen (Fa. Nabertherm, Typ W1000/H) bei 720°C 90 min getempert. Das erkaltete Material (ca. 10 kg) wird mit einem Backenbrecher und einer Scheibenmühle pulverisiert.

Beispiel 13

In einem Taumelmischer werden 3668 g feingemahlene wasserfreie Soda zu 15 kg des sprühgetrockneten amorphen Natriumsilikates von Beispiel 1 gegeben und 1h gemischt. Die Mischung wird in einem Muffelofen (Fa. Nabertherm, Typ W1000/H) bei 720°C 90 min getempert. Das erkaltete Material (ca. 10 kg) wird mit einem Backenbrecher und einer Scheibenmühle pulverisiert.

Beispiel 14 (Vergleich)

In 50 kg Wasserglas mit der Zusammensetzung wie in Beispiel 1 werden 1138 g wasserfreies Natriumsulfat gelöst und die Lösung in einem Laborzerstäubungstrocker (Sprühturm) der Fa. Anhydro sprühgetrocknet zu einem amorphen Natriumsilikat mit einem Aktivstoffgehalt von ca. 83 %. 15 kg des amorphen Natriumsilikates werden in einem Muffelofen (Fa. Nabertherm, Typ W1000/H) bei 720°C 90 min getempert. Das erkaltete Produkt (ca. 10 kg) wird mit einem Backenbrecher und einer Scheibenmühle pulverisiert.

Beispiel 15

In 50 kg Wasserglas mit der Zusammensetzung wie in Beispiel 1 werden 637 g wasserfreies Natriumsulfat und 501 g wasserfreie Soda gelöst und die Lösung in einem Laborzerstäubungstrocker (Sprühturm) der Fa. Anhydro sprühgetrocknet zu einem amorphen Natriumsilikat mit einem Aktivstoffgehalt von ca. 83 %. 15 kg des amorphen Natriumsilikates werden in einem Muffelofen (Fa. Nabertherm, Typ W1000/H) bei 720°C 90 min getempert. Das erkaltete Produkt (ca. 10 kg) wird mit einem Backenbrecher und einer Scheibenmühle pulverisiert.

Beispiel 16 (Vergleich)

In 50 kg Wasserglas mit der Zusammensetzung wie in Beispiel 1 werden 1104 g Dinatriumhydrogenphosphatdihydrat gelöst und die Lösung in einem Laborzerstäubungstrocker (Sprühturm) der Fa. Anhydro sprühgetrocknet zu einem amorphen Natriumsilikat mit einem Aktivstoffgehalt von ca. 83 %. 15 kg des amorphen Natriumsilikates werden in einem Muffelofen (Fa. Nabertherm, Typ W1000/H) bei 720°C 90 min getempert. Das erkaltete Produkt (ca. 10 kg) wird mit einem Backenbrecher und einer Scheibenmühle pulverisiert.

Beispiel 17/I

In 50 kg Wasserglas mit der Zusammensetzung wie in Beispiel 1 werden 1104 g Dinatriumhydrogenphosphatdihydrat und 683 g wasserfreie Soda gelöst und die Lösung in einem Laborzerstäubungstrocker (Sprühturm) der Fa. Anhydro sprühgetrocknet zu einem amorphen Natriumsilikat mit einem Aktivstoffgehalt von ca. 83 %. 15 kg des amorphen Natriumsilikates werden in einem Muffelofen (Fa. Nabertherm, Typ W1000/H) bei 720°C 90 min getempert. Das erkaltete Produkt (ca. 10 kg) wird mit einem Backenbrecher und einer Scheibenmühle pulverisiert.

Beispiel 17/II

In 50 kg Wasserglas mit der Zusammensetzung wie in Beispiel 1 werden 1104 g Dinatriumhydrogenphosphatdihydrat, 683 g wasserfreies Natriumsulfat und 683 g wasserfreie Soda gelöst und die Lösung in einem Laborzerstäubungstrocker (Sprühturm) der Fa. Anhydro sprühgetrocknet zu einem amorphen Natriumsilikat mit einem Aktivstoffgehalt von ca. 83 %. 15 kg des amorphen Natriumsilikates werden in einem Muffelofen (Fa. Nabertherm, Typ W1000/H) bei 720°C 90 min getempert. Das erkaltete Produkt (ca. 10 kg) wird mit einem Backenbrecher und einer Scheibenmühle pulverisiert.

Beispiel 18 (Vergleich)

Entsprechend der allgemeinen Vorschrift "Herstellung der Testwaschmittel" wurde ein Test-Ultracompact-Vollwaschmittel mit 35 % kommerziell käuflichem Zeolith hergestellt. Entsprechend den allgemeinen Vorschriften "Waschversuche", "Bestimmung der anorganischen Inkrustierung" und "Bestimmung der Waschwirkung" wurde in Modellwaschversuchen die Bildung von anorganischen Inkrustierungen und die Waschwirkung untersucht: Anorganische Inkrustierung 3,70 %, Waschwirkung 16,5 %.

Beispiel 19 (Vergleich)

Entsprechend der allgemeinen Vorschrift "Herstellung der Testwaschmittel" wurde ein Test-Ultracompact-Vollwaschmittel mit käuflichem Zeolith und Silikat aus Beispiel 1 hergestellt. Entsprechend den allgemeinen Vorschriften "Waschversuche", "Bestimmung der anorganischen Inkrustierung" und "Bestimmung der Waschwirkung" wurde in Modellwaschversuchen die Bildung von anorganischen Inkrustierungen und die Waschwirkung untersucht: Anorganische Inkrustierung 2,82 %, Waschwirkung 18,6 %.

Beispiel 20 (Vergleich)

Entsprechend der allgemeinen Vorschrift "Herstellung der Testwaschmittel" wurde ein Test-Ultracompact-Vollwaschmittel mit käuflichem Zeolith und Silikat aus Beispiel 2 hergestellt. Entsprechend den allgemeinen Vorschriften "Waschversuche", "Bestimmung der anorganischen Inkrustierung" und "Bestimmung der Waschwirkung" wurde in Modellwaschversuchen die Bildung von anorganischen Inkrustierungen und die Waschwirkung untersucht: Anorganische Inkrustierung 2,39 %, Waschwirkung 17,3 %.

Beispiel 21

Entsprechend der allgemeinen Vorschrift "Herstellung der Testwaschmittel" wurde ein Test-Ultracompact-Vollwaschmittel mit 35 % Silikat aus Beispiel 5 hergestellt. Entsprechend den allgemeinen Vorschriften "Waschversuche", "Bestimmung der anorganischen Inkrustierung" und "Bestimmung der Waschwirkung" wurde in Modellwaschversuchen die Bildung von anorganischen Inkrustierungen und die Waschwirkung untersucht: Anorganische Inkrustierung 1,68 %, Waschwirkung 25,4 %.

Beispiel 22

Entsprechend der allgemeinen Vorschrift "Herstellung der Testwaschmittel" wurde ein Test-Ultracompact-Vollwaschmittel mit käuflichem Zeolith und Silikat aus Beispiel 5 hergestellt. Entsprechend den allgemeinen Vorschriften "Waschversuche", "Bestimmung der anorganischen Inkrustierung" und "Bestimmung der Waschwirkung" wurde in Modellwaschversuchen die Bildung von anorganischen Inkrustierungen und die Waschwirkung untersucht: Anorganische Inkrustierung 1,27 %, Waschwirkung 23,4 %.

Beispiel 23

Entsprechend der allgemeinen Vorschrift "Herstellung der Testwaschmittel" wurde ein Test-Ultracompact-Vollwaschmittel mit käuflichem Zeolith und Silikat aus Beispiel 7 hergestellt. Entsprechend den allgemeinen Vorschriften "Waschversuche", "Bestimmung der anorganischen Inkrustierung" und "Bestimmung der Waschwirkung" wurde in Modellwaschversuchen die Bildung von anorganischen Inkrustierungen und die Waschwirkung untersucht: Anorganische Inkrustierung 1,20 %, Waschwirkung 22,9 %.

Beispiel 24

Entsprechend der allgemeinen Vorschrift "Herstellung der Testwaschmittel" wurde ein Test-Ultracompact-Vollwaschmittel mit käuflichem Zeolith und Silikat aus Beispiel 9 hergestellt. Entsprechend den allgemeinen Vorschriften "Waschversuche", "Bestimmung der anorganischen Inkrustierung" und "Bestimmung der Waschwirkung" wurde in Modellwaschversuchen die Bildung von anorganischen Inkrustierungen und die Waschwirkung untersucht: Anorganische Inkrustierung 1,23 %, Waschwirkung 24,8 %.

Beispiel 25

Entsprechend der allgemeinen Vorschrift "Herstellung der Testwaschmittel" wurde ein Test-Ultracompact-Vollwaschmittel mit käuflichem Zeolith und Silikat aus Beispiel 10 hergestellt. Entsprechend den allgemeinen Vorschriften "Waschversuche", "Bestimmung der anorganischen Inkrustierung" und "Bestimmung der Waschwirkung" wurde in Modellwaschversuchen die Bildung von anorganischen Inkrustierungen und die Waschwirkung untersucht: Anorganische Inkrustierung 1,53 %, Waschwirkung 23,7 %.

Beispiel 26

Entsprechend der allgemeinen Vorschrift "Herstellung der Testwaschmittel" wurde ein Test-Ultracompact-Vollwaschmittel mit käuflichem Zeolith und Silikat aus Beispiel 13 hergestellt. Entsprechend den allgemeinen Vorschriften "Waschversuche", "Bestimmung der anorganischen Inkrustierung" und "Bestimmung der Waschwirkung" wurde in Modellwaschversuchen die Bildung von anorganischen Inkrustierungen und die Waschwirkung untersucht: Anorganische Inkrustierung 1,17 %, Waschwirkung 22,8 %.

Beispiel 27

Entsprechend der allgemeinen Vorschrift "Herstellung der Testwaschmittel" wurde ein Test-Ultracompact-Vollwaschmittel mit käuflichem Zeolith und Silikat aus Beispiel 17/I hergestellt. Entsprechend den allgemeinen Vorschriften "Waschversuche", "Bestimmung der anorganischen Inkrustierung" und "Bestimmung der Waschwirkung" wurde in Modellwaschversuchen die Bildung von anorganischen Inkrustierungen und die Waschwirkung untersucht: Anorganische Inkrustierung 0,89 %, Waschwirkung 25,2 %.

Beispiel 28

Entsprechend der allgemeinen Vorschrift "Herstellung der Testwaschmittel" wurde ein Test-Ultracompact-Vollwaschmittel mit käuflichem Zeolith und Silikat aus Beispiel 7 und der aus Tabelle 3 folgenden weiteren Zusammensetzung hergestellt.

Beispiel 29

Entsprechend der allgemeinen Vorschrift "Herstellung der Testwaschmittel" wurde ein Test-Ultracompact-Vollwaschmittel mit Silikat aus Beispiel 5 und der aus Tabelle 3 folgenden weiteren Zusammensetzung hergestellt.

Beispiel 30

Entsprechend der allgemeinen Vorschrift "Herstellung der Testwaschmittel" wurde ein Test-Vollwaschmittel mit Phosphat und Silikat aus Beispiel 5 und der aus Tabelle 3 folgenden weiteren Zusammensetzung hergestellt.

Beispiel 31

Entsprechend der allgemeinen Vorschrift "Herstellung der Testwaschmittel" wurde ein Test-Vollwaschmittel mit Zeolith und Silikat aus Beispiel 5 und der aus Tabelle 3 folgenden weiteren Zusammensetzung hergestellt.

Beispiel 32

Entsprechend der allgemeinen Vorschrift "Herstellung der Testwaschmittel" wurde ein Test-Vollwaschmittel mit Zeolith und Silikat aus Beispiel 7 und der aus Tabelle 3 folgenden weiteren Zusammensetzung hergestellt.

Beispiel 33

Entsprechend der allgemeinen Vorschrift "Herstellung der Testwaschmittel" wurde ein Test-Wasserenthärter mit Zeolith und Silikat aus Beispiel 7 und der aus Tabelle 3 folgenden weiteren Zusammensetzung hergestellt.

Beispiele 34 bis 40

Entsprechend der allgemeinen Vorschrift "Herstellung der Testwaschmittel" und den Tabellen 3 und 4 wurden mitZeolith und Silikat aus Beispiel 7 Waschmitteltabs gepresst.

Beispiel 41

Entsprechend der allgemeinen Vorschrift "Herstellung der Testwaschmittel" wurde ein Test-Vollwaschmittel mit Zeolith und Silikat aus Beispiel 5 und der aus Tabelle 4 folgenden weiteren Zusammensetzung hergestellt.

Beispiel 42

Entsprechend der allgemeinen Vorschrift "Herstellung der Testwaschmittel" wurde ein Test-Vollwaschmittel mit Zeolith und Silikat aus Beispiel 7 und der aus Tabelle 4 folgenden weiteren Zusammensetzung hergestellt.

Beispiel 43

Entsprechend der allgemeinen Vorschrift "Herstellung der Testwaschmittel" wurde ein Test-Vollwaschmittel mit Zeolith und Silikat aus Beispiel 10 und der aus Tabelle 4 folgenden weiteren Zusammensetzung hergestellt.

Beispiel 44

Entsprechend der allgemeinen Vorschrift "Herstellung der Testwaschmittel" wurde ein Test-Vollwaschmittel mit Zeolith und Silikat aus Beispiel 12 und der aus Tabelle 4 folgenden weiteren Zusammensetzung hergestellt.

Beispiel 45

Entsprechend der allgemeinen Vorschrift "Herstellung der Testwaschmittel" wurde ein Test-Vollwaschmittel mit Silikat aus Beispiel 5 und der aus Tabelle 4 folgenden weiteren Zusammensetzung hergestellt.

Beispiel 46

Entsprechend der allgemeinen Vorschrift "Herstellung der Testwaschmittel" wurde ein Test-Vollwaschmittel mit Silikat aus Beispiel 5 und der aus Tabelle 4 folgenden weiteren Zusammensetzung hergestellt.

Beispiel 47

Entsprechend der allgemeinen Vorschrift "Herstellung der Testwaschmittel" wurde ein Test-Fleckensalz mit Silikat aus Beispiel 7 und der aus Tabelle 4 folgenden weiteren Zusammensetzung hergestellt.

Beispiele 48 bis 54

Entsprechend der allgemeinen Vorschrift "Herstellung der Maschinengeschirreiniger" wurden Maschinengeschirreiniger hergestellt (Tabelle 5).

Beispiel 55

Ein Maschinengeschirreinigergel wird hergestellt, indem man mit einem Dispergator (Ultraturrax, Fa. Hanke und Kunkel) Wasserglas, Phosphat, Soda, Natriumhydroxid, Phosphonat, Polymer, Alkansulfonat, Phosphorsäureester untermischt. Silikat und Natriumhypochlorit werden zum Schluß kurz untergemischt (Tabelle 6).

## Tabelle 1a

| Beispiele | | 1 (Vgl) | 2 (Vgl) | 3 (Vgl) | 4 | 5 | 6 | 7 | 8 | 9 |
|---|---|---|---|---|---|---|---|---|---|---|
| Phasen | % Alpha | 2,9 | 3,6 | 8,2 | 15,6 | 3,0 | | | | 14,6 |
| | % Beta | 7,4 | 10,5 | 13,2 | 4,2 | 20,7 | | | | 7,3 |
| | % Delta | 89,7 | 85,9 | 78,6 | 80,2 | 76,3 | | | | 78,1 |
| CBV | mgCaCO$_3$/g, 2 min | 173,3 | 152 | | 190 | 210 | - | - | - | 198 |
| Teilchen- | d 50 | 22,96 | 19,3 | *516,9 | 22,26 | 20,5 | 16,1 | *661 | 27,2 | 16,1 |
| größe | d 95 | 97,74 | 95,9 | | 83,02 | 97,1 | 43,6 | 1180 | 169,7 | 45,22 |
| Löslichkeit | % ungelöstes Material | 90,6 | 92,3 | 76,4 | 46,4 | 18,2 | 16,8 | 15,6 | 15,9 | 23,2 |

## Tabelle 1b

| Beispiele | | 10 | 11 | 12 | 13 | 14 (Vgl) | 15 | 16 (Vgl) | 17 I | 17II |
|---|---|---|---|---|---|---|---|---|---|---|
| Phasen | % Alpha | 10,9 | 3,1 | 2,9 | 13,2 | 7,3 | 0,0 | 5,4 | 7,0 | 11,1 |
| | % Beta | 2,6 | 9,2 | 15,4 | 8,2 | 14,0 | 4,6 | 9,2 | 8,3 | 6,5 |
| | % Delta | 86,5 | 87,8 | 81,8 | 78,6 | 80,6 | 95,4 | 85,4 | 84,7 | 82,4 |
| CBV | mgCaCO$_3$/g, 2 min | 190 | 187 | 190,2 | 203,8 | 182,3 | 205 | 234,5 | 232,5 | 230,2 |
| Teilchen- | d 50 | 19,52 | 17,81 | 24,1 | 19,8 | 23,8 | 22,5 | 21,9 | 19,3 | 20,5 |
| größe | d 95 | 44,73 | 62,23 | 90,05 | 63,5 | 96,2 | 92,6 | 91,2 | 96,7 | 89,4 |
| Löslichkeit | % ungelöstes Material | 27,3 | 20,4 | 46,3 | 51 | 86,3 | 18,8 | 28,4 | 18,6 | 17,9 |

Tabelle 2

| Beispiele | | 18 | 19 | 20 | 21 | 22 | 23 | 24 | 25 | 26 | 27 |
|---|---|---|---|---|---|---|---|---|---|---|---|
| | | Vgl | Vgl | Vgl | | | | | | | |
| Zeolith A | [%] | 35 | 20 | 20 | - | 20 | 20 | 20 | 20 | 20 | 20 |
| Silikat aus Bsp. 1 | [%] | - | 15 | - | - | - | - | - | - | - | - |
| Silikat aus Bsp. 2 | [%] | - | - | 15 | - | - | - | - | - | - | - |
| Silikat aus Bsp. 5 | [%] | - | - | - | 35 | 15 | - | - | - | - | - |
| Silikat aus Bsp. 7 | [%] | - | - | - | - | - | 15 | - | - | - | - |

Tabelle 2 (fortgesetzt)

| Beispiele | | 18 | 19 | 20 | 21 | 22 | 23 | 24 | 25 | 26 | 27 |
|---|---|---|---|---|---|---|---|---|---|---|---|
| | | Vgl | Vgl | Vgl | | | | | | | |
| Silikat aus Bsp. 9 | [%] | - | - | - | - | - | - | 15 | - | - | - |
| Silikat aus Bsp. 10 | [%] | - | - | - | - | - | - | - | 15 | - | - |
| Silikat aus Bsp. 12 | [%] | - | - | - | - | - | - | - | - | 15 | - |
| Silikat aus Bsp. 17/I | [%] | - | - | - | - | - | - | - | - | - | 15 |
| Polymer 1 | [%] | 6 | 6 | 6 | 6 | 6 | 6 | 6 | 6 | 6 | 6 |
| Soda | [%] | 13 | 13 | 13 | 13 | 13 | 13 | 13 | 13 | 13 | 13 |
| Percarbonat | [%] | 18 | 18 | 18 | 18 | 18 | 18 | 18 | 18 | 18 | 18 |
| TAED 1 | [%] | 5 | 5 | 5 | 5 | 5 | 5 | 5 | 5 | 5 | 5 |
| LAS | [%] | 9 | 9 | 9 | 9 | 9 | 9 | 9 | 9 | 9 | 9 |
| AE 1 | [%] | 4 | 4 | 4 | 4 | 4 | 4 | 4 | 4 | 4 | 4 |
| AE 2 | [%] | 4 | 4 | 4 | 4 | 4 | 4 | 4 | 4 | 4 | 4 |
| Seife | [%] | 1,5 | 1,5 | 1,5 | 1,5 | 1,5 | 1,5 | 1,5 | 1,5 | 1,5 | 1,5 |
| Antischaum | [%] | 1,0 | 1,0 | 1,0 | 1,0 | 1,0 | 1,0 | 1,0 | 1,0 | 1,0 | 1,0 |
| Enzym 1 | [%] | 1,5 | 1,5 | 1,5 | 1,5 | 1,5 | 1,5 | 1,5 | 1,5 | 1,5 | 1,5 |
| Enzym 3 | [%] | 1,5 | 1,5 | 1,5 | 1,5 | 1,5 | 1,5 | 1,5 | 1,5 | 1,5 | 1,5 |
| Opt. Aufheller | [%] | 0,50 | 0,50 | 0,50 | 0,50 | 0,50 | 0,50 | 0,50 | 0,50 | 0,50 | 0,50 |
| Dosierung | [%] | 72 | 72 | 72 | 72 | 72 | 72 | 72 | 72 | 72 | 72 |
| Anorg. Inkrustierung | [%] | 3,70 | 2,82 | 2,39 | 1,68 | 1,27 | 1,20 | 1,23 | 1,53 | 1,17 | 0,89 |
| Waschwirkung | [%] | 16,5 | 18,6 | 17,3 | 25,4 | 23,4 | 22,9 | 24,8 | 23,7 | 22,8 | 25,2 |

Tabelle 3

| Beispiele | | 28 | 29 | 30 | 31 | 32 | 33 | 34 | 35 | 36 | 37 |
|---|---|---|---|---|---|---|---|---|---|---|---|
| | | | | | | | | | | | |
| Zeolith A | [%] | 20 | - | - | 20 | 30 | 40 | - | 15 | 25 | - |
| Phosphat 1 | [%] | - | - | 25 | - | - | - | - | - | - | - |
| Silikat aus Bsp. | 5 [%] | - | 45 | 10 | 5 | - | - | - | - | - | - |
| Silikat aus Bsp. | 7 [%] | 15 | - | - | - | 10 | 15 | 30 | 15 | 5 | 30 |
| Polymer 1 | [%] | 6 | - | - | 3 | 7 | 7 | 4 | 4 | 4 | 4 |
| Soda | [%] | 13 | - | - | 18 | - | 15 | 14 | 12 | 10 | 12 |

Tabelle 3 (fortgesetzt)

| Beispiele | | 28 | 29 | 30 | 31 | 32 | 33 | 34 | 35 | 36 | 37 |
|---|---|---|---|---|---|---|---|---|---|---|---|
| Bicarbo-nat | [%] | - | 15 | - | - | 18 | 5 | 5 | 5 | 5 | 5 |
| Perborat mh | [%] | 18,0 | - | - | - | - | - | - | - | - | - |
| Perborat th | [%] | - | - | 20 | 20 | - | - | - | - | - | - |
| Percarbonat | [%] | | 18 | - | - | - | - | 12 | 12 | 12 | 12 |
| TAED 1 | [%] | 5 | 5 | - | 2,5 | - | - | 4 | 4 | 4 | 4 |
| LAS | [%] | 9 | - | 6,7 | 9 | 8,0 | - | 7 | 7 | 7 | 7 |
| AE 1 | [%] | 4 | 10 | 2,2 | 5 | 10 | 2 | - | - | - | - |
| AE 2 | [%] | 4 | - | - | - | - | - | - | - | - | - |
| AE3 | [%] | - | - | - | - | - | - | 4 | 4 | 4 | 4 |
| Seife | [%] | 1,5 | - | - | - | 1,0 | 2,0 | - | - | - | - |
| Antischaum | [%] | 1,0 | 1,0 | 0,6 | 0,6 | 1,0 | - | - | - | - | - |
| Enzym 1 | [%] | 1,5 | 1,5 | 0,6 | 0,6 | 1,5 | - | - | - | - | - |
| Enzym 3 | [%] | 1,5 | 1,5 | 0,6 | 0,6 | 1,5 | - | - | - | - | - |
| Opt. Aufheller | [%] | 0,50 | 0,50 | 0,20 | 0,20 | - | - | - | - | - | - |
| Phosphonat 1 | [%] | - | 0,2 | 0,1 | 0,1 | 0,2 | - | - | - | - | - |
| Citronensäure | [%] | - | - | - | - | 2 | 5 | 6 | 6 | 6 | 6 |
| Polyvi-nylpyr-rolidon | [%] | - | - | - | - | 1 | - | - | - | - | - |
| Soil release polymer | [%] | - | - | - | - | 0,8 | - | - | - | - | - |
| CMC | [%]- | | - | - | - | 1 | - | - | - | - | - |
| Cellulose | [%] | - | - | - | - | - | - | 5,0 | 7,0 | 9,0 | - |
| Sulfat | [%] | - | 2,3 | 34,0 | 15,4 | 7,0 | 9 | - | - | - | - |
| Acetat th | [%] | - | - | - | - | - | - | 9,0 | 9,0 | 9,0 | 16,0 |
| Dosierung | [%] | 72 | 65 | 135 | 135 | 72 | 30+65 | 2*40 | 2*40 | 2*40 | 2*40 |

Tabelle 4

| Beispiele | | 38 | 39 | 40 | 41 | 42 | 43 | 44 | 45 | 46 | 47 |
|---|---|---|---|---|---|---|---|---|---|---|---|
| | | | | | | | | | | | |
| Zeolith A | [%] | 15 | - | 15 | 31 | 31 | 16 | 29,3 | - | - | - |
| Silikat aus Bsp. 5 | [%] | - | - | - | 20 | - | - | - | 12 | 5 | - |
| Silikat aus Bsp. 7 | [%] | 15 | 31 | 16 | - | 20 | - | - | - | - | 8,6 |
| Silikat aus Bsp. 10 | [%] | - | - | - | - | - | 39,8 | - | - | - | |
| Silikat aus Bsp. 12 | [%] | - | - | - | - | - | - | 3,6 | - | - | - |
| Polymer 1 | [%] | 4 | 7 | 7 | 5 | - | 3 | 2,5 | 2 | 1,8 | - |
| Soda | [%] | 12 | 14 | 14 | - | 5 | 5,0 | 40,7 | 29 | 76 | 34 |
| Bicarbonat | [%] | 5 | 10 | 10 | - | - | - | - | - | - | - |
| Perborat mh | [%] | - | - | - | - | - | - | - | - | 2,8 | - |
| Perborat th | [%] | - | - | - | - | - | - | - | - | 2,4 | - |
| Percarbonat | [%] | 12 | 12 | 12 | - | - | - | - | - | - | 21 |
| TAED 1 | [%] | 4 | 4 | 4 | - | - | - | - | - | - | 7,2 |
| LAS | [%] | 7 | 7 | 7 | 10 | 30 | - | 7,2 | 6,5 | - | - |
| Alkansulfonat | [%] | - | - | - | - | - | - | 8,5 | 4,5 | 8,5 | 5 |
| AE 1 | [%] | - | - | - | 15 | 4 | 17,9 | 3,1 | - | 3,5 | - |
| AE 2 | [%] | - | - | - | 10 | 3 | - | - | - | - | - |
| AE3 | [%] | 4,0 | 4 | 4 | - | - | - | - | - | - | - |
| Seife | [%] | - | - | - | - | - | 13,1 | - | - | - | 1 |
| Enzym 1 | [%] | - | - | - | 1,5 | 0,5 | 0,5 | 0,3 | - | - | - |
| Enzym 3 | [%] | - | - | - | 1,5 | 0,5 | 0,5 | 0,3 | - | - | - |
| Opt. Aufheller | [%] | - | - | - | - | 0,5 | - | - | - | - | - |
| Citronensäure | [%] | 6,0 | 11 | 11 | - | - | - | - | - | - | - |
| Sulfat | [%] | - | - | - | 6 | 6 | 4,2 | 5 | - | - | 21,7 |
| Natriumchlorid | [%] | - | - | - | - | - | - | - | 46 | - | 1,7 |
| Acetat th | [%] | 16,0 | - | - | - | - | - | - | - | - | - |
| Dosierung | [%] | 2*40 | 2*40 | 2*40 | 0,5gl | 0,5g/l | 0,5g<-> /l | 80 | 80 | 150 | 40 |
| | | | | | | | | | | | |

Tabelle 5

| | | Beispiele | | | | | | |
|---|---|---|---|---|---|---|---|---|
| | | 48 | 49 | 50 | 51 | 52 | 53 | 54 |
| Phosphat 2 | [%] | - | - | 25,0 | 40,0 | 47,0 | 20,0 | 20,0 |
| Metasilicat pentahydrat | [%] | - | - | - | - | - | 47,0 | 3,0 |
| Silikat aus Bsp. 7 | [%] | 20,0 | 5,0 | 15,0 | 15,0 | 5,2 | 3,0 | 47,0 |
| Soda | [%] | 22,7 | 32,7 | 30,0 | 24,7 | 27,5 | 17,5 | 17,0 |
| Natriumhydroxid | [%] | - | - | - | - | - | 8,0 | 8,0 |
| Citrat th | [%] | 30,0 | 35,0 | - | - | - | - | |
| Percarbonat | [%] | 10,0 | 10,0 | - | - | - | - | |
| Perborat mh | [%] | - | - | 10,0 | 10,0 | 10,0 | - | |
| NaDCC | [%] | - | - | - | - | - | 1,0 | 4,0 |
| Polymer 2 | [%] | 7,5 | 7,5 | 5,0 | 3,5 | 3,5 | - | |
| TAED 2 | [%] | 5,0 | 5,0 | 2,0 | 2,0 | 2,0 | - | |
| Enzym 2 | [%] | 1,0 | 1,0 | 1,5 | 1,0 | 1,0 | - | |
| Enzym 4 | [%] | 2,0 | 2,0 | 2,5 | 2,0 | 2,0 | - | |
| AE 4 | [%] | 1,5 | 1,5 | 1,5 | 1,5 | 1,5 | 3,5 | 1,0 |
| Parfüm | [%] | 0,3 | 0,3 | 1,5 | 0,3 | 0,3 | - | |
| Sulfat | [%] | - | - | 6,0 | - | - | - | |
| Dosierung | [g] | 20 | 20 | 20 | 20 | 20 | 2 g/l | 2g/l |

Tabelle 6

| | | Beispiel 55 |
|---|---|---|
| Phosphat 3 | [%] | 22,0 |
| Buildersilikat aus Bsp. 6 | [%] | 5,5 |
| Soda | [%] | 1,0 |
| Natriumhydroxid | [%] | 1,0 |
| Phosphonat 2 | [%] | 0,6 |
| Polymer 3 | [%] | 1,5 |
| | | |
| Alkansulfonat | [%] | 1,5 |
| Wasserglas | [%] | 37,0 |
| Phosphorsäureester | [%] | 0,4 |
| Natriumhypochlorit | [%] | 9,0 |
| Wasser | [%] | 20,5 |
| Dosierung | [g] | 40 |

Eingesetzte Substanzen:

| | |
|---|---|
| Zeolith A: | Wessalith P, Fa. Degussa |
| Phosphat 1: | Natriumtripolyphosphat von Fa. Thermphos Intl. |
| Phosphat 2: | Makrophos 1018, Fa. BK Giulini |
| Phosphat 3: | Thermphos NW grob |
| Polymer 1: | Sokalan CP5 Pulver, Fa. BASF |
| Polymer 2: | Sokalan CP45, Fa. BASF |
| Polymer 3: | Sokalan CP5 flüssig, Fa. BASF |
| Soda: | Schwersoda, Fa. Matthes&Weber |
| Bicarbonat: | Fa. Solvay |
| Percarbonat: | Oxyper C, Fa. Solvay Interox |
| Perboratmonohydrat (Perborat mh): | Fa. Degussa |
| Perborat tetrahydrat (Perborat th): | Fa. Degussa |
| TAED 1: | TAED 4049, Fa. Clariant |
| TAED 2: | TAED 3873, Fa. Clariant |
| LAS: | Marlon ARL, Fa. Hüls |
| AE 1: | Genapol OAA 080, Fa. Clariant |
| AE 2: | Genapol OAA 040, Fa. Clariant |
| AE 3: | Genagen 81MEE100, Fa. Clariant |
| AE 4: | Genapol 2822, Fa. Clariant |
| Seife: | Liga Grundseife HM11E |
| Antischaum: | 11.Plv.ASP3, Fa. Wacker |
| Enzym 1: | Termamyl 60T, Fa. Solvay Enzymes |
| Enzym 2: | Termamyl 120T, Fa. Solvay Enzymes |
| Enzym 3: | Savinase 6.0 TW, Fa. Solvay Enzymes |
| Enzym 4: | Savinase 6.0 TW, Fa. Solvay Enzymes |
| Optischer Aufheller: | Tinopal CBS-X, Fa. Ciba |
| Phosphonat 1: | Dequest 2041, Fa. Monsanto |
| Phosphonat 2: | Dequest 200, Fa. Monsanto |
| Citronensäure: | von Fa. Jungbunzlauer |
| Polyvinylpyrrolidon: | Sokalan HP50, Fa. BASF |
| Soil release Polymer: | SRC 1, Fa. Clariant |
| CMC: | Tylose 2000, Fa. Clariant |
| Cellulose: | Arbocell, Fa. Rettenmaier |
| Sulfat: | von Fa. Solvay |
| Natriumacetattrihydrat (Acetat th): | Fa. Riedel-de Haen |
| Parfüm: | Citronenparfüm 78122D, Fa Orissa |
| Natriumhydroxid: | Microprills 100 %, Fa. Riedel-de Haen |
| Alkansulfonat: | Hostapur SAS 60, Fa. Clariant |
| Wasserglas: | 45,5 % Aktivsubstanz, Modul 2,0, Fa. Clariant France |
| Phosphorsäureester: | Hordaphos 158, Fa. Clariant |
| Natriumhypochlorit: | Celanese GmbH |
| Trinatriumcitrat trihydrat (Citrat th): | Fa. Rettenmaier |
| Metasilicat pentahydrat: | Fa. van Baerle |
| Natriumdichlordiisocyanurat (NaDCC): | von Fa Olin Chemicals |
| Natriumchlorid | Fa. Merck KGaA |

**Patentansprüche**

1. Kristallines Alkalischichtsilikat der allgemeinen Formel

$$a\ M^I_2O \cdot b\ EO_2 \cdot c\ X_2O_5 \cdot d\ ZO_3 \cdot SiO_2 \cdot e\ H_2o,$$

in der $M^I$ ein Alkalimetall, E ein Element der vierten Hauptgruppe, X ein Element der fünften Hauptgruppe und Z ein Element der sechsten Hauptgruppe des Periodensystems bedeuten und weiterhin gilt:

$0,25 \leq a \leq 6,25$
$2,5 \cdot 10^{-4} \leq b \leq 5,63$
$0 \leq c \leq 2,81$
$0 \leq d \leq 5,63$
$0 \leq e \leq 15,3.$

2. Kristallines Alkalischichtsilikat nach Anspruch 1, dadurch gekennzeichnet,

daß d = 0 und
$0,25 \leq a \leq 6,25$
$2,5 \cdot 10^{-4} \leq b \leq 5,63$
$1,25 \cdot 10^{-4} \leq c \leq 2,81$
$3,13 \cdot 10^{-4} \leq e \leq 15,3.$

3. Kristallines Alkalischichtsilikat nach Anspruch 1, dadurch gekennzeichnet,

daß c = 0 und
$0,25 \leq a \leq 6,25$
$2,5 \cdot 10^{-4} \leq b \leq 5,63$
$2,5 \cdot 10^{-4} \leq d \leq 5,63$
$0 \leq e \leq 12,5.$

4. Kristallines Alkalischichtsilikat nach Anspruch 1, dadurch gekennzeichnet,

daß c = 0 und d = 0 und
$0,25 \leq a \leq 6,25$
$2,5 \cdot 10^{-4} \leq b \leq 5,63$
$0 \leq e \leq 12,5.$

5. Kristallines Alkalischichtsilikat nach einem oder mehreren der Ansprüche 1 bis 4, dadurch gekennzeichnet, daß es sich bei dem Alkalimetall ($M^I$) um Lithium, Natrium, Kalium, Cäsium oder Mischungen davon handelt.

6. Kristallines Alkalischichtsilikat nach einem oder mehreren der Ansprüche 1 bis 5, dadurch gekennzeichnet, daß es sich bei dem Element der vierten Hauptgruppe (E) um Kohlenstoff, Germanium, Zinn, Blei oder Mischungen davon handelt.

7. Kristallines Alkalischichtsilikat nach einem oder mehreren der Ansprüche 1 bis 6, dadurch gekennzeichnet, daß es sich bei dem Element der fünften Hauptgruppe (X) um Stickstoff, Phosphor, Arsen, Antimon, Wismut oder Mischungen davon handelt.

8. Kristallines Alkalischichtsilikat nach einem oder mehreren der Ansprüche 1 bis 7, dadurch gekennzeichnet, daß es sich bei dem Element der sechsten Hauptgruppe (Z) um Schwefel, Selen, Tellur oder Mischungen davon handelt.

9. Kristallines Alkalischichtsilikat nach einem oder mehreren der Ansprüche 1 bis 8, dadurch gekennzeichnet, daß es bis zu 10 Gew.-% Fremdbestandteile enthält.

10. Kristallines Alkalischichtsilikat nach einem oder mehreren der Ansprüche 1 bis 9, dadurch gekennzeichnet, daß es sich bei den Fremdbestandteilen um Erdalkalimetallionen (Magnesium, Calcium, Strontium, Barium), Aluminium, Zink, Eisen, Titan, Vanadium, Chrom, Mangan, Cobalt, Nickel, Bor, Fluorid, Chlorid, Bromid und/oder Iodid handelt.

11. Verfahren zur Herstellung von Natriumsilikaten der allgemeinen Formel

$$a\ M^I_2O \cdot b\ EO_2 \cdot c\ X_2O_5 \cdot d\ ZO_3 \cdot SiO_2 \cdot e\ H_2O,$$

in der $M^I$ ein Alkalimetall, E ein Element der vierten Hauptgruppe, X ein Element der fünften Hauptgruppe und Z ein Element der sechsten Hauptgruppe des Periodensystems bedeuten und weiterhin gilt: $0,25 \leq a \leq 6,25$; $2,5 \cdot 10^{-4} \leq b \leq 5,63$; $0 \leq c \leq 2,81$; $0 \leq d \leq 5,63$; $0 \leq e \leq 15,3$, dadurch gekennzeichnet, daß man ein Natriumsilikathaltiges Ausgangsmaterial mit einer oder mehreren Verbindungen, die die Komponenten $M^I$, E, X, und/oder Z enthalten, mischt und anschließend tempert.

12. Verfahren nach Anspruch 11, dadurch gekennzeichnet, daß es sich bei dem Natriumsilikathaltigen Ausgangsmaterial um Alkaliwassergläser oder um sprühgetrocknetes amorphes Natriumsilikat handelt.

13. Verfahren nach Anspruch 12, dadurch gekennzeichnet, daß man Alkaliwassergläser mit Alkalicarbonat, Alkalisulfat und/oder Alkaliphosphaten vermischt, das erhaltene Produkt sprühtrocknet und anschließend tempert.

14. Verfahren nach Anspruch 12, dadurch gekennzeichnet, daß man sprühgetrocknetes amorphes Natriumsilikat mit Alkalicarbonat, Alkalisulfat und/oder Alkaliphosphaten vermischt und anschließend tempert.

15. Verfahren nach einem oder mehreren der Ansprüche 12 bis 14, dadurch gekennzeichnet, daß man bei Temperaturen von 700 bis 1300K tempert.

16. Wasch- und Reinigungsmittel, dadurch gekennzeichnet, daß es ein kristallines Alkali-schichtsilikat nach einem oder mehreren der Ansprüche 1 bis 10 enthält.

17. Wasch- und Reinigungsmittel nach Anspruch 16, dadurch gekennzeichnet,
daß es

    0,5 bis 90 Gew.-% des kristallinen Alkalischichtsilikats
    0,5 bis 70 Gew.-% Cobuilder
    ad 100 Gew.-% weitere übliche Inhaltsstoffe enthält.

18. Wasch- und Reinigungsmittel nach Anspruch 16, dadurch gekennzeichnet,
daß es

    0,5 bis 90 Gew.-% des kristallinen Alkalischichtsilikats
    0,5 bis 60 Gew.-% Tensid
    ad 100 Gew.-% weitere übliche Inhaltsstoffe enthält.

19. Wasch- und Reinigungsmittel nach Anspruch 16, dadurch gekennzeichnet,
daß es

    0,5 bis 90 Gew.-% des kristallinen Alkalischichtsilikats
    0,5 bis 60 Gew.-% bleichaktive Agenzien
    ad 100 Gew.-% weitere übliche Inhaltsstoffe enthält.

20. Wasch- und Reinigungsmittel nach Anspruch 16, dadurch gekennzeichnet,
daß es

    0,5 bis 90 Gew.-% des kristallinen Alkalischichtsilikats
    0,5 bis 70 Gew.-% Cobuilder
    0,5 bis 60 Gew.-% Tensid
    ad 100 Gew.-% weitere übliche Inhaltsstoffe enthält.

21. Wasch- und Reinigungsmittel nach Anspruch 16, dadurch gekennzeichnet,
daß es

    0,5 bis 90 Gew.-% des kristallinen Alkalischichtsilikats
    0,5 bis 70 Gew.-% Cobuilder
    0,5 bis 60 Gew.-% bleichaktive Agenzien
    ad 100 Gew.-% weitere übliche Inhaltsstoffe enthält.

22. Wasch- und Reinigungsmittel nach Anspruch 16, dadurch gekennzeichnet,
daß es

    0,5 bis 90 Gew.-% des kristallinen Alkalischichtsilikats

0,5 bis 70 Gew.-% Cobuilder

0,5 bis 60 Gew.-% Tensid

0,5 bis 60 Gew.-% bleichaktive Agenzien

ad 100 Gew.-% weitere übliche Inhaltsstoffe enthält.

23. Wasch- und Reinigungsmittel nach Anspruch 16, dadurch gekennzeichnet, daß es

0,5 bis 90 Gew.-% des kristallinen Alkalischichtsilikats

0,5 bis 70 Gew.-% Elektrolytlieferant

ad 100 Gew.-% weitere übliche Inhaltsstoffe enthält.

24. Wasch- und Reinigungsmittel nach Anspruch 16, dadurch gekennzeichnet, daß es

50 bis 99 Gew.-% des kristallinen Alkalischichtsilikats

0,01 bis 10 Gew.-% Farbstoff

ad 100 Gew.-% weitere übliche Inhaltsstoffe enthält.

25. Wasch- und Reinigungsmittel nach einem oder mehreren der Ansprüche 16 bis 24, dadurch gekennzeichnet, daß es sich bei den Cobuildern um kristalline Aluminosilikate, mono-, oligo- oder polymere Carbonsäuren, Alkalicarbonate, Alkaliortho-, -pyro-, polyphosphate, kristalline Alkalisilikate mit einem Kristallgitter ohne Schichtstruktur und/oder amorphe Alkalisilikate handelt.

26. Wasch- und Reinigungsmittel nach einem oder mehreren der Ansprüche 16 bis 25, dadurch gekennzeichnet, daß es sich bei den bleichaktiven Agenzien um Perborate, Percarbonate und/oder Enzyme handelt.

27. Wasch- und Reinigungsmittel nach einem oder mehreren der Ansprüche 16 bis 26, dadurch gekennzeichnet, daß es sich bei den Tensiden um anionische, kationische, nichtionische und/oder zwitterionische Tenside handelt.

28. Wasch- und Reinigungsmittel nach einem oder mehreren der Ansprüche 16 bis 27, dadurch gekennzeichnet, daß es sich bei den Elektrolytlieferanten um Sulfate, Chloride und/oder Borate handelt.